# EUROPÄISCHE PATENTSCHRIFT

(11) **EP 1 370 774 B1**
(45) Veröffentlichungstag und Bekanntmachung des Hinweises auf die Patenterteilung: **22.09.2004**
(21) Anmeldenummer: 02706709.9
(22) Anmeldetag: 16.01.2002
(51) Int. Cl.: F16B 13/14

(54) **ANKERHÜLSE ZUR INJEKTIONSBEFESTIGUNG**
ANCHOR SLEEVE FOR INJECTION FIXING
DOUILLE D'ANCRAGE POUR SCELLEMENT PAR INJECTION

(30) Priorität: 22.03.2001 DE 20105013 U
(43) Veröffentlichungstag der Anmeldung: 17.12.2003
(73) Patentinhaber: fischerwerke Artur Fischer GmbH & Co. KG, 72178 Waldachtal (DE)
(72) Erfinder: ASSADI, Amir, 79312 Emmendingen (DE); SCHNEIDER, Steffen, 72250 Freudenstadt (DE); GRIESBAUM, Gebhard, 79312 Emmendingen (DE); HEIZMANN, Rainer, 79312 Emmendingen (DE); SCHMIDT, Clemens, 79211 Denzlingen (DE)
(86) Internationale Anmeldenummer: PCT/EP2002/000355
(87) Internationale Veröffentlichungsnummer: WO 2002/077464

(56) Entgegenhaltungen:
- WO-A-90/05855
- DE-A- 3 515 137
- DE-A- 3 712 463
- DE-A- 4 014 787
- US-A- 5 857 817

## Beschreibung

Die Erfindung betrifft eine Ankerhülse zur Injektionsbefestigung mit den Merkmalen des Oberbegriffs des Anspruchs 1. Eine solche Ankerhülse ist aus dem Document DE 35 15 137 A bekannt. Dabei ist mit Injektionsbefestigung die Verankerung einer Ankerstange bspw. mit Mörtel in einem Bohrloch in einem Mauerwerk gemeint.

Derartige Ankerhülsen sind an sich bekannt. Sie sind als Siebhülsen bspw. aus Kunststoff ausgebildet und werden zur Verankerung in ein Bohrloch in einem Mauerwerk eingebracht. Anschließend wird Mörtel in die Ankerhülse injiziert und tritt durch Sieblöcher der als Siebhülse ausgebildeten Ankerhülse aus der Ankerhülse aus. Die Sieblöcher bilden Austrittsöffnungen für den in die Ankerhülse injizierten Mörtel. Anschließend wird die Ankerstange in die Ankerhülse eingebracht. Sie verdrängt und verdichtet den Mörtel und ist nach dem Aushärten des Mörtels in der Bohrung im Mauerwerk verankert.

Die bekannten Ankerhülsen haben den Nachteil, dass sie nur für einen bestimmten Ankerstangendurchmesser ausgelegt sind.

Der Erfindung liegt die Aufgabe zugrunde, eine Ankerhülse der vorstehend erläuterten Art so auszubilden, dass sie für unterschiedliche Ankerstangendurchmesser geeignet ist.

Diese Aufgabe wird erfindungsgemäß durch die Merkmale des Anspruchs 1 gelöst. Die erfindungsgemäße Ankerhülse mit den Merkmalen des Anspruchs 1 weist nach innen stehende Stützelemente auf, die eine zwischen sie in die Ankerhülse eingebrachte Ankerstange in der Ankerhülse abstützen. Die Stützelemente können Noppen, Nasen, Rippen oder dgl. sein. Sie halten eine in die Ankerhülse eingebrachte Ankerstange in einer vorgesehenen Lage.

Vorzugsweise sind die Stützelemente so angeordnet und ausgebildet, dass sie eine in die Ankerhülse eingebrachte Ankerstange zumindest in etwa koaxial in der Ankerhülse abstützen. Dadurch lässt sich eine vorgesehene Lage der im Mauerwerk verankerten Ankerstange erreichen. Eine außermittige und/oder schiefe Verankerung der Ankerstange in der Ankerhülse wird vermieden.

Eine Ausgestaltung der Erfindung sieht elastisch und/oder plastisch verformbare Stützelemente vor. Die Verformbarkeit wird durch die Form der Stützelemente und das Material, bspw. Kunststoff, der Stützelemente erreicht. Die Verformbarkeit der Stützelemente hat den Vorteil, dass sich die Stützelemente an unterschiedliche Ankerstangendurchmesser anpassen.

Die Stützelemente können bspw. als Noppen, Nasen, umlaufende Rippen oder dgl. ausgebildet sein. Eine Ausgestaltung der Erfindung sieht Stützrippen als Stützelemente vor, die in Längsrichtung der Ankerhülse oder auch wendelförmig verlaufen. Dies hat den Vorteil einer Entformbarkeit der Ankerhülse aus einem Werkzeug, wenn die Ankerhülse durch Spritzgießen oder ein vergleichbares Herstellungsverfahren aus Kunststoff hergestellt wird. Stützrippen als Stützelemente haben zudem den Vorteil der Verformbarkeit beim Einbringen einer Ankerstange in die Ankerhülse.

Eine Weiterbildung der Erfindung sieht vor, dass die Stützrippen seitlich versetzt zu gedachten Axialebenen der Ankerhülse angeordnet sind. Die Stützrippen stehen also nicht radial, sondern in Sehnenrichtung nach innen. Diese Ausgestaltung der Erfindung hat den Vorteil, dass die Stützrippen nicht senkrecht, sondern in einer Sekantenrichtung auf einen Umfang einer in die Ankerhülse eingebrachten Ankerstange stoßen und sich dadurch leichter von der Ankerstange zur Seite drücken und verformen lassen. Dies erleichtert eine Durchmesseranpassung der Ankerhülse und vergrößert einen möglichen Durchmesserbereich in die Ankerhülse einbringbarer Ankerstangen. Eine koaxiale Abstützung von Ankerstangen unterschiedlichen Durchmessers in der Ankerhülse ist ohne weiteres möglich.

Die Erfindung wird nachfolgend anhand eines in der Zeichnung dargestellten Ausführungsbeispiels näher erläutert. Es zeigen:
- Figur 1: eine erfindungsgemäße Ankerhülse in perspektivischer Darstelllung;
- Figur 2: eine Stirndarstellung der Ankerhülse gemäß Pfeil II in Figur 1; und
- Figur 3: die Ankerhülse mit einer eingebrachten Ankerstange in einer Figur 2 entsprechenden Darstellung, wobei zwei unterschiedliche Ankerstangendurchmesser dargestellt sind.

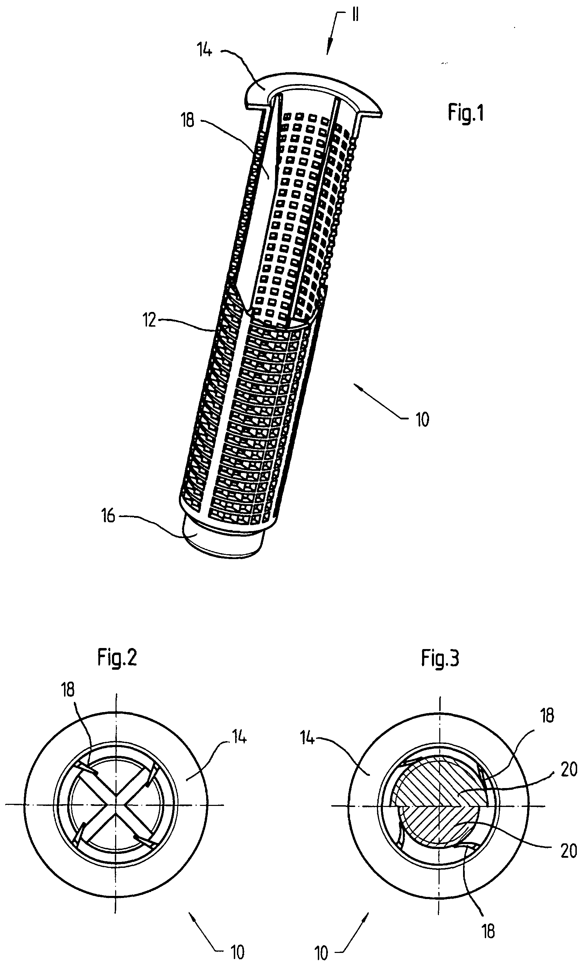

Die in Figur 1 dargestellte erfindungsgemäße Ankerhülse 10 zur Injektionsbefestigung ist einstückig aus Kunststoff hergestellt. Die Ankerhülse 10 ist als Siebhülse ausgebildet, d.h. ihre Umfangswandung ist siebartig mit einer Vielzahl Sieblöcher ausgeführt, die Austrittsöffnungen 12 zum Austritt von in die Ankerhülse 10 injiziertem Mörtel bilden. Ein hinteres Ende der Ankerhülse 10 ist zum Einbringen eines in Figur 1 nicht dargestellten Ankerstabs offen, dass hintere Ende weist einen nach außen stehenden, ringschreibenförmigen Setzbund 14 auf, der mit der Ankerhülse 10 einstückig ist. Ein vorderes- oder Einsteckende 16 der Ankerhülse 10 ist geschlossen ausgeführt. Die Ankerhülse 10 wird mit ihrem vorderen Ende voran in ein nicht dargestelltes Bohrloch in einem Mauerwerk eingebracht.

Auf ihrer Innenseite weist die erfindungsgemäße Ankerhülse 10 Stützrippen 18 auf, die Stützelemente für eine in die Ankerhülse 10 einbringbare Ankerstange bilden. Im dargestellten und beschriebenen Ausführungsbeispiel der Erfindung weist die Ankerhülse 10 vier Stützrippen 18 auf, die gleichmäßig über den Umfang verteilt angeordnet sind. Die Stützrippen 18 verlaufen in Längsrichtung der Ankerhülse 10, sie sind einstückig mit der Ankerhülse 10, bestehen also wie diese aus Kunststoff und sind elastisch und/oder plastisch verformbar. Die Stützrippen 18 sind nicht radial in der Ankerhülse 10, also nicht in gedachten Axialebenen der Ankerhülse 10 angeordnet, sondern, wie in Figur 2 zu sehen, seitlich bzw. in Umfangsrichtung zu gedachten Axialebenen der Ankerhülse 10 versetzt. Dabei sind alle vier Stützrippen 18 in derselben Umfangsrichtung und um denselben Weg versetzt. Die Stützrippen 18 sind in Sehnenrichtungen und symmetrisch angeordnet.

Die Stützrippen 18 halten eine in die Ankerhülse 10 eingebrachte Ankerstange 20, bspw. eine Gewindestange, koaxial in der Ankerhülse 10. Beim Einbringen in die Ankerhülse 10 drückt die Ankerstange 20 die Stützrippen 18 zur Seite, was durch die Anordnung der Stützrippen 18 in Sehnenrichtungen vereinfacht ist. Durch die Anordnung in Sehnenrichtungen stoßen die Stützrippen 18 nicht senkrecht auf einen Umfang der Ankerstange 20, sondern in Sekantenrichtung, weswegen sich die Stützrippen 18 leichter zur Seite drücken lassen. Trotzdem ist eine koaxiale Abstützung der Ankerstange 20 in der Ankerhülse 10 gewährleistet. Die Stützrippen 18 ermöglichen das Einbringen von Ankerstangen 20 unterschiedlichen Durchmessers in die Ankerhülse 10. Eine Ankerstange 20 mit großem Durchmesser drückt die Stützrippen 18 weiter zur Seite als eine Ankerstange 20 mit kleinerem Durchmesser. Die koaxiale Abstützung von Ankerstangen 20 mit unterschiedlichem Durchmesser ist in Figur 3 dargestellt, wo in der oberen Bildhälfte eine Hälfe einer Ankerstange 20 mit großem Durchmesser und in der unteren Bildhälfte eine Hälfte einer Ankerstange 20 mit kleinem Durchmesser dargestellt ist.

Die Verwendung der Ankerhülse 10 ist folgende: zur Verankerung einer Ankerstange 20 wird die Ankerhülse 10 in einem Bohrloch in einem nicht dargestellten Mauerwerk eingebracht, so dass sie mit ihrem Setzbund 14 auf dem Mauerwerk aufsitzt. Anschließend wird ein Mörtel, insbesondere ein Kunstharzmörtel, durch das offene, hintere Ende der Ankerhülse 10 in diese injiziert. Der injizierte Mörtel tritt durch die Austrittsöffnungen 12 aus der Ankerhülse 10 aus in einen Zwischenraum zwischen der Ankerhülse 10 und dem nicht dargestellten Bohrloch. Nach der Injektion des Mörtels wird die Ankerstange 20 in die Ankerhülse 10 eingebracht, wobei die Ankerstange 20 den injizierten Mörtel verdrängt und verfestigt. Die Stützrippen 18 führen die Ankerstange 20 koaxial und stellen eine koaxiale Ausrichtung der Ankerstange 20 in der Ankerhülse 10 sicher. Nach dem Aushärten des Mörtels ist die Ankerstange 20 fest im Bohrloch verankert.

## Patentansprüche

1. Ankerhülse zur Injektionsbefestigung, wobei die Ankerhülse (10) Austrittsöffnungen (12) zum Austritt von in die Ankerhülse injiziertem Mörtel aufweist, und wobei die Ankerhülse (10) nach innen stehende, verformbare Stützelemente (18) aufweist, die eine in die Ankerhülse (10) eingebrachte Ankerstange (20) in der Ankerhülse (10) abstützen, **dadurch gekennzeichnet, dass** die Stützelemente (18) als in Längsrichtung oder wendelförmige verlaufende Stützrippen (18) ausgebildet und dass die Stützrippen (18) in Umfangsrichtung versetzt zu gedachten Axialebenen der Ankerhülse (10) angeordnet sind.

2. Ankerhülse nach Anspruch 1, **dadurch gekennzeichnet, dass** die Stützelemente (18) eine in die Ankerhülse (10) eingebrachte Ankerstange (20) zumindest in etwa koaxial in der Ankerhülse (10) abstützen.

## Claims

1. Anchor sleeve for injection fixing, the anchor sleeve (10) having outlet openings (12) for egress of mortar injected into the anchor sleeve, and wherein the anchor sleeve (10) has inwardly extending deformable supporting elements (18), which, in the anchor sleeve (10), support an anchor rod (20) introduced into the anchor sleeve (10), **characterized in that** the supporting elements (18) are in the form of supporting ribs (18) extending in the lengthwise direction or helically and **in that** the supporting ribs (18) are arranged circumferentially offset in relation to notional axial planes of the anchor sleeve (10).

2. Anchor sleeve according to claim 1, **characterized in that** the supporting elements (18) support an anchor rod (20) introduced into the anchor sleeve (10) at least approximately coaxially in the anchor sleeve (10).

## Revendications

1. Douille d'ancrage pour scellement par injection, la douille d'ancrage (10) comportant des orifices de sortie (12) pour la sortie de mortier injecté dans la douille d'ancrage, et la douille d'ancrage (10) comportant des éléments de support (18) orientés vers l'intérieur, déformables, qui supportent dans la douille d'ancrage (10) une tige d'ancrage (20) introduite dans la douille d'ancrage (10), **caractérisée en ce que** les éléments de support (18) sont formés comme des nervures de support (18) s'étendant dans la direction longitudinale ou de manière hélicoïdale et **en ce que** les nervures de support (18) sont agencées dans la direction circonférentie.lle avec un décalage par rapport à des plans axiaux imaginaires de la douille d'ancrage (10).

2. Douille d'ancrage selon la revendication 1, **caractérisée en ce que** les éléments de support (18) supportent une tige d'ancrage (20) introduite dans la douille d'ancrage (10) au moins à peu près coaxialement dans la douille d'ancrage (10).
